Europäisches Patentamt

European Patent Office

Office européen des brevets

(19)

(11) Publication number: **0 064 171**
**B1**

(12) **EUROPEAN PATENT SPECIFICATION**

(45) Date of publication of patent specification: **30.07.86**

(51) Int. Cl.⁴: **G 01 T 7/12, G 01 D 18/00**

(21) Application number: **82102990.7**

(22) Date of filing: **07.04.82**

(54) **Apparatus for monitoring the operational integrity of parameter measuring detectors.**

(30) Priority: **23.04.81 US 256644**

(43) Date of publication of application:
**10.11.82 Bulletin 82/45**

(45) Publication of the grant of the patent:
**30.07.86 Bulletin 86/31**

(84) Designated Contracting States:
**BE DE FR GB IT**

(56) References cited:
**GB-A- 923 799**
**GB-A-1 010 902**
**GB-A-1 141 730**
**US-A-2 963 588**

(73) Proprietor: **WESTINGHOUSE ELECTRIC CORPORATION**
**Westinghouse Building Gateway Center**
**Pittsburgh Pennsylvania 15222 (US)**

(72) Inventor: **Chaprnka, Anthony George**
**Ten-1A Warren Lodge Court**
**Cockeysville Maryland (US)**

(74) Representative: **Fleuchaus, Leo, Dipl.-Ing. et al**
**Fleuchaus & Wehser Melchiorstrasse 42**
**D-8000 München 71 (DE)**

## Description

This invention relates to an improved apparatus and to a method for monitoring the operational integrity of parameter measuring detectors.

In nuclear reactor installations, the operational integrity of radiation monitoring channels is typically verified by exposing the radiation detectors associated with the channels to a check source. For detectors employed in low radiation environments, this is accomplished with a low level check source requiring a minimal amount of shielding and control. Such a corresponding detector is used in the safety device for radiation level, as described in US—A—2963588. For detectors employed in higher radiation fields, i.e., post-accident radiation monitors, the strength of the check source becomes prohibitively high, thus requiring periodic manual verifications of the operational integrity of the radiation monitoring channels.

It is a first object of this invention to provide an improved apparatus for monitoring the operational integrity of such parameter measuring detectors with a view to overcoming the deficiencies of the prior art.

The apparatus according to the invention resides in apparatus for monitoring the operational integrity of a parameter measuring detector means which generates an output signal indicative of the level of a selected parameter within a monitored environment, comprising a check source means for generating a predetermined level of the selected parameter, wherein said predetermined level is less than the maximum parameter level response capability of said parameter measuring detector means, characterized in that the apparatus includes activating means for generating an intermittent output signal to activate said check source means during a time period T1 and to deactivate said check source means during a time period T2, said check source means subjecting said parameter measuring detector means to said predetermined level of the selected parameter during the time period T1, said parameter measuring detector means generating an output signal during the time period T1 corresponding to the combination of the selected parameter from both the monitored environment and the check source means, and an output signal during the time period T2 corresponding to the selected parameter of the monitored environment; synchronous detector means operatively connected to said parameter measuring detector means and said activating means for separately detecting and averaging the components of the output signal generated by the parameter measuring detector means corresponding to the time periods T1 and T2, respectively, and generating an output signal indicative of the difference between the averages of said signal components, this difference corresponding to a measurement by the parameter measuring detector means of the predetermined level of the selected parameter generated by the check source means; and comparator circuit means for comparing the output signal of said synchronous detector means and a reference signal corresponding to the actual level of said predetermined level generated by said check source means, a discrepancy being indicative of an operational irregularity in said parameter measuring detector means.

It is a second object of this invention to provide a method as described in claim 4.

The signal processing technique as described briefly above has application to a wide range of parameter measuring configurations, i.e., radiation, pressure, vibration, etc. In the application of the technique in combination with a detector for radiation monitoring, the technique permits the use of a relatively small, low level, radiation check source to determine the operational integrity of radiation channels for both low radiation and high radiation monitoring systems. In the conventional radiation monitoring arrangement, a radiation check source is sized to indicate about one decade above the highest anticipated background to assure discrimination against background. There is disclosed herein a technique wherein the radiation check sorce is reduced to convenient strengths and continuously exposed to the detector for periodic, or random, activation of the operational integrity verification of a radiation monitoring channel. While the change in channel output as a result of the relatively small radiation check source may be indistinguishable from noise and background using conventional discrimination techniques, the small signal change is detectable if it is detected synchronously with the exposure of the detector by the check source.

The invention will become more readily apparent from the following description of exemplary embodiments thereof when taken in connection with the accompanying drawings, in which:

Figure 1A and 1B are block diagram schematic illustrations of an implementation of the invention; and

Figure 2 is a block diagram schematic illustration of an alternate implementation of the invention.

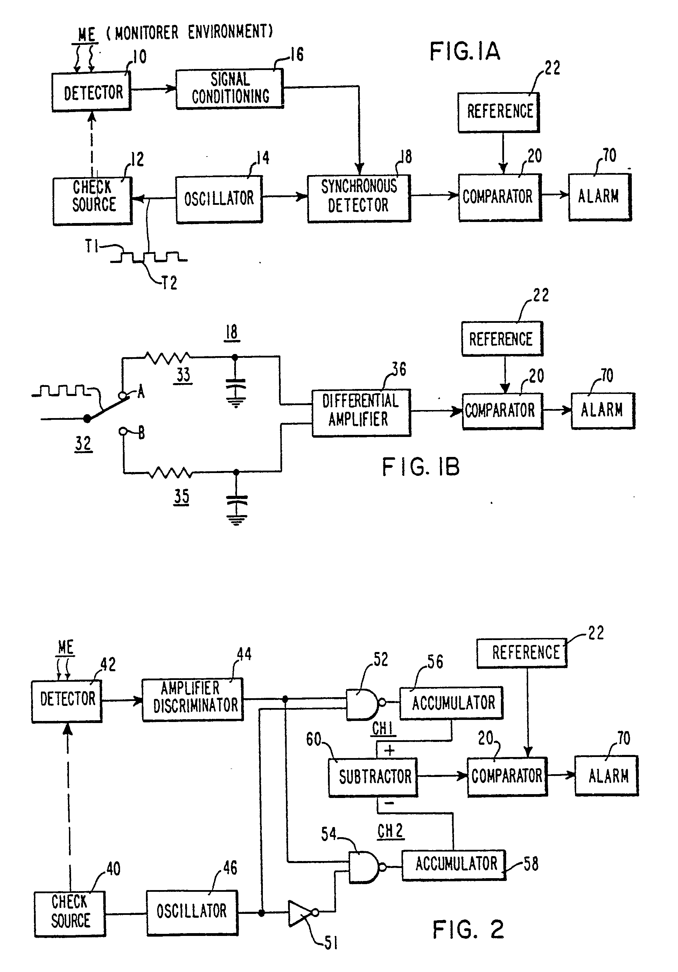

While the disclosed technique for monitoring the operational integrity of parameter measuring detectors, as is typically illustrated in the schematic diagrams of Figures 1A, 1B and 2, have application to numerous parameter measuring configurations, the following description in connection with the accompanying drawings depicts the disclosed technique in combination with a radiation measuring detector.

Referring to Figure 1A, a radiation detector 10, which may be typically implemented through the use of an ion chamber, generates an output signal in response to the radiation level of a monitored environment ME. A radiation check source 12, in response to excitation from an oscillator or modulator 14, periodically or intermittently, subjects the detector 10 to a level of check source radiation. It may be advantageous to use a periodic or random modulation to provide immunity to external radiation sources. The modulator 14, which may be typically considered a pulse generator and suitably implemented through a shutter arrangement, activates the radiation check source 12 during a first time period T1 during which the detector 10 is exposed to a level of check source radiation, and deactivates the radiation check source 12 during the time period T2. Inasmuch as it is desirable to maintain the radiation level of the check source 12 quite low in order to avoid potentially hazardous radiation levels, the frequency of the activation pulses generated by the modulator 14 will be quite low, i.e., in the region of one pulse per 10 to 1000 seconds. The output of the detector 10 during the activation periods T1 corresponds to the combination of the measured radiation of the monitored environment ME plus the radiation level of the radiation check source 12. The output signal of the detector 10 during the pulse periods T2 corresponds to a measurement of the radiation level of the monitored environment ME only. The output signals from detector 10 corresponding to the periodic time periods T1 and T2 are supplied through a signal conditioning circuit 16 to a synchronous detector circuit 18. The signal conditioning circuit 16 typically represents an amplifier circuit and, may further provide compensation for non-linearity in the output signals from the detector 10. While the above implementation of the technique for monitoring the operational integrity of a radiation detector 10 dictates the use of a check source suitable for transmitting a level of radiation to the detector 10 in response to excitation from the modulator 14, the application of this technique to other parameter measuring detectors, such as pressure, would merely require the substitution of a pressure check source for the radiation check source 12.

The synchronous detector 18 represents circuitry which separately detects and averages both the signal components of the output signal of the detector 10, namely, the signal component during time periods T1 during which the detector is exposed to the radiation level from the check source 12 as well as during the times T2 when the output signal of the detector 10 corresponds solely to the radiation level within the monitored environment ME. Due to the low rate of pulses from the modulator 14, as dictated by the low level of radiation from the check source 12, the output signals from the detector 10 are averaged over an extended period of time, i.e., many minutes to hours, to obtain the required confidence level.

The synchronous detector 18 provides an output signal indicative of the difference between the two averaged signal components. This signal, which corresponds to a measurement of the radiation level of the check source 12 is supplied as an input to a comparator circuit 20. A signal corresponding to the actual level of the check source 12 is supplied as an input to a comparator circuit 20. A signal corresponding to the actual level of the check source radiation is supplied from a reference circuit 22 as a second input to the comparator circuit 20. A discrepancy between the two input signals results in an output signal from the comparator circuit 20 to an alarm or control circuit 70 indicating an inoperative condition.

A typical implementation of the synchronous detector 18 is schematically illustrated in Figure 1B for a linear DC responding detector. In this implementation the pulse output of the modulator 14 controls the position of a switch 32 between switch positions A and B. When the switch 32 is in position A, corresponding to the time period T1 of the pulse output of the modulator 14, the component of the output signal of the detector 10 corresponding to the combination of the radiation levels of the monitored environment ME and that generated by the check source 12 is averaged by the filter circuit 33. When the switch 32 is in position B, corresponding to the time period T2, the component of the output signal from the detector 10 corresponding to the radiation level of the monitored environment ME is averaged by the filter arrangement 35. A differential amplifier 36 subtracts the output signals from the filters 33 and 35 to produce a signal indicative solely of the radiation level generated by the check source 12. This signal is in turn supplied as a first input to the comparator circuit 20 which in turn has as a second input a signal from the reference source 22. The level of the signal from the reference source 22 corresponds to the radiation level generated by the check source 12. Thus, if the signal developed by the differential amplifier 36 differs beyond predetermined limits from the reference level signal developed by the reference source 22, the comparator circuit 20 will transmit this discrepancy to the annunciator or control circuit 70. This discrepancy is indicative of an operational problem in the detector 10 or associated circuitry.

A variation in the implementation of the inventive concept is schematically illustrated in Figure 2. While the operation of the implementation of Figure 2 is similar to that described above, the major difference is that instead of working with DC levels, counts per unit time are averaged and subtracted. While this mode of operation lends itself readily to the use of a microprocessor for essentially all circuitry except for the detector 10 and the check source 12, a hardware component implementation of the digital counting approach is illustrated in Figure 2. The detector 42, instead of developing a DC voltage output as a measure of incident radiation as was the case of the detector 10 in Figure 1A, develops an output pulse rate which is proportional to the parameter being measured, i.e., incident radiation. The operation of the check source 40 in response to the oscillator or modulator 46 is the same as described above with reference to the implementation of Figure 1A. The amplifier/discriminator circuit 44 responds to the output pulses of the detector 42 by generating standardized pulse heights and optimizing the response time of the circuitry to minimize the effects of electromagnetic interference, circuit noise, etc. The logic elements represented by the inverter 51 and the NAND gates 52 and 54 of the count channels CH1 and CH2, respectively, act in concert as a switch to route the pulse output corresponding to the time periods T1 and T2 to the accumulators 56 and 58. The accumulators, or counters, 56 and 58 store the count levels corresponding to the time periods T1 and T2, respectively, until the counters are reset. The time periods T1 and T2, as described above, are determined by the pulse output pattern developed by the modulator 46. The subtractor circuit 60 takes the difference of the counts in the counters 56 and 58 and averages these differences over a period of time to determine the measured intensity of the check source 40. The output of circuit 60 is supplied to the comparator circuit 20 where it is compared to a reference signal from the source 22 which corresponds to the actual radiation level of the check source 40. As stated above, a difference between the actual radiation level generated by the check source 40 and the measured radiation level of the check source 40 as represented by the output of the comparator circuit 20 provides a necessary indication of the operational integrity of the detector and associated circuitry. This indication is transmitted to the annunciator, or control, circuit 70.

**Claims**

1. Apparatus for monitoring the operational integrity of a parameter measuring detector means (10) which generates an output signal indicative of the level of a selected parameter within a monitored environment, comprising a check source means (12) for generating a predetermined level of the selected parameter, wherein said predetermined level is less than the maximum parameter level response capability of said parameter measuring detector means (10), characterized in that the apparatus includes activating means (14) for generating an intermittent output signal to activate said check source means (12) during a time period T1 and to deactivate said check source means (12) during a time period T2, said check source means (12) subjecting said parameter measuring detector means (10) to said predetermined level of the selected parameter during the time period T1, said parameter measuring detector means (10) generating an output signal during the time period T1 corresponding to the combination of the selected parameter from both the monitored environment and the check source means (12), and an output signal during the time period T2 corresponding to the selected parameter of the monitored environment; synchronous detector means (18) operatively connected to said parameter measuring detector means (10) and said activating means (14) for separately detecting and averaging the components of the output signal generated by the parameter measuring detector means (10) corresponding to the time periods T1 and T2, respectively, and generating an output signal indicative of the difference between the averages of said signal components, this difference corresponding to a measurement by the parameter measuring detector means (10) of the predetermined level of the selected parameter generated by the check source means (12); and comparator circuit means (20) for comparing the output signal of said synchronous detector means (18) and a reference signal corresponding to the actual level of said predetermined level generated by said check source means (12), a discrepancy being indicative of an operational irregularity in said parameter measuring detector means (10).

2. Apparatus as claimed in claim 1 characterized in that the output signal of the parameter measuring detector means is a pulse output signal and said synchronous detector means includes means for separately accumulating the pulse information of the pulse output signal during the time periods T1 and T2, respectively, and means for subtracting the accumulated pulse information for the time periods T1 and T2 to produce an output signal from said synchronous detector means indicative of the predetermined level of the selected parameter generated by the check source means as measured by the parameter measuring detector means.

3. Apparatus as claimed in claim 1 wherein said parameter measuring detector means is a radiation detector means, characterized in that said check source means is a radiation source which responds to the activating means by intermittently subjecting said radiation detector means to a predetermined level of radiation.

4. A method for monitoring the operational integrity of a parameter measuring detector means which generates an output signal indicative of the level of a selected parameter within a monitored environment, comprising generating a predetermined level of the selected parameter, wherein said predetermined level is less than the maximum parameter level response capability of said parameter measuring detector means, characterized by the steps of intermittently subjecting said parameter measuring detector means to said predetermined level of the selected parameter during a time period T1 and removing said predetermined level of said selected parameter during a time period T2, said parameter measuring detector means generating an output signal during the time period T1 corresponding to the sum of the level of the selected parameter from the monitored environment and the predetermined level of the selected parameter, and an output signal during the time period T2 corresponding to the level of the selected parameter of the monitored environment; separately detecting and averaging the components of the output signal generated by the parameter measuring detector means corresponding to the time periods T1 and T2, respectively, and generating an output signal indicative of the difference between the averages of said signal components, this difference corresponding to a measurement by the parameter measuring detector means of said predetermined level of the selected parameter; and comparing said difference to the actual magnitude of said predetermined level of the selected parameter to determine the operational integrity of the parameter measuring detector means.

## Patentansprüche

1. Einrichtung zur Überwachung der Funktionstüchtigkeit eines Detektors (10) zum Messen von Parametern, der ein Ausgangssignal erzeugt, das den Pegel eines ausgewählten Parameters innerhalb einer überwachten Umgebung anzeigt, mit einer Prüfquelle (12) zur Erzeugung eines vorbestimmten Pegels des ausgewählten Parameters, wobei der vorbestimmte Pegel kleiner ist als der Maximalpegel, den der Parametermeßdetektor (10) verarbeiten kann, gekennzeichnet durch: — Aktiviervorrichtungen (14), die ein intermittierendes Ausgangssignal erzeugen, um die Prüfquelle (12) während einer Zeitperiode T1 zu aktivieren und die Prüfquelle (12) während einer Zeitperiode T2 zu deaktivieren, wobei die Prüfquelle (12) den vorbestimmten Pegel des ausgewählten Parameters während der Zeitperiode T1 an den Parametermeßdetektor (10) anlegt und wobei der Parametermeßdetektor (10) während der Zeitperiode T1 ein Ausgangssignal erzeugt, das der Kombination des ausgewählten Parameters von sowohl der überwachten Umgebung als auch der Prüfquelle (12) entspricht und während der Zeitperiode T2 ein Ausgangssignal, das dem ausgewählten Parameter der überwachten Umgebung entspricht;
— synchrone Detektorvorrichtungen (18), die operativ mit dem Parametermeßdetektor (10) und den Aktiviervorrichtungen (14) verbunden sind, um die vom Parametermeßdetektor (10) erzeugten und den Zeitperioden T1 bzw. T2 entsprechenden Komponenten des Ausgangssignals getrennt festzustellen und Mittelwerte daraus zu bilden, und die ein Ausgangssignal erzeugen, das die Differenz zwischen den Mittelwerten der Signalkomponenten anzeigt, wobei diese Differenz einer Messung des von der Prüfquelle (12) erzeugten vorbestimmten Pegels des ausgewählten Parameters durch den Parametermeßdetektor (10) entspricht;
— und Vergleichsschaltkreise (20) zum Vergleichen des Ausgangssignals der synchronen Detektorvorrichtungen (18) mit einem Bezugssignal, das dem tatsächlichen Pegel des vorbestimmten Pegels entspricht, der von der Prüfquelle (12) erzeugt wird, wobei eine Diskrepanz auf eine Funktions-Unregelmäßigkeit im Parametermeßdetektor hinweist.
2. Einrichtung nach Anspruch 1, dadurch gekennzeichnet, — daß das Ausgangssignal des Parametermeßdetektors ein Impulsausgangssignal ist und die synchronen Detektorvorrichtungen Vorrichtungen enthalten, mit denen die Impulsinformation des Impulsausgangssignals während der Zeitperioden T1 bzw. T2 separat akkumuliert wird, sowie Vorrichtungen, mit denen die akkumulierte Impulsinformation für die Zeitperioden T1 und T2 subtrahiert wird, um ein Ausgangssignal der synchronen Detektorvorrichtungen zu erzeugen, das den vorbestimmten Pegel des von der Prüfquelle erzeugten ausgewählten Parameters anzeigt, wie er vom Parametermeßdetektor gemessen wird.
3. Einrichtung nach Anspruch 1, in der der Parametermeßdetektor ein Strahlungsdetektor ist, dadurch gekennzeichnet, — daß die Prüfquelle eine Strahlungsquelle ist, die auf die Aktiviervorrichtungen anspricht, indem sie den Strahlungsdetektor intermittierend einem vorbestimmten Pegel von Strahlung aussetzt.
4. Verfahren zur Überwachung der Funktionstüchtigkeit eines Parametermeßdetektors, der ein Ausgangssignal erzeugt, das den Pegel eines ausgewählten Parameters innerhalb einer überwachten Umgebung anzeigt, bei dem ein vorbestimmter Pegel des ausgewählten Parameters erzeugt wird, wobei der vorbestimmte Pegel kleiner ist als der Maximalpegel, den der Parametermeßdetektor verarbeiten kann, gekennzeichnet durch die Schritte; — der Parametermeßdetektor wird intermittierend während einer Zeitperiode T1 dem vorbestimmten Pegel des ausgewählten Parameters ausgesetzt, wogegen während einer Zeitperiode T2 der vorbestimmte Pegel des ausgewählten Parameters nicht anliegt, wobei der Parametermeßdetektor während der Zeitperiode T1 einerseits ein Ausgangssignal erzeugt, das der Summe des Pegels des ausgewählten Parameters der überwachten Umgebung und dem vorbestimmten Pegel des ausgewählten Parameters entspricht, und während der Zeitperiode T2 andererseits ein Ausgangssignal erzeugt, das dem Pegel des ausgewählten Parameters der überwachten Umgebung entspricht;
— die Komponenten des von dem Parametermeßdetektor erzeugten Ausgangssignals entsprechend der Zeitperioden T1 bzw. T2 werden getrennt festgestellt und Mittelwerte daraus gebildet und ein Ausgangssignal erzeugt, das die Differenz zwischen den Mittelwerten der Signalkomponenten anzeigt, wobei diese Differenz einer Messung des vorbestimmten Pegels des ausgewählten Parameters durch den Parametermeßdetektor entspricht;
— und es wird die Differenz mit dem tatsächlichen Betrag des vorbestimmten Pegels des ausgewählten Parameters verglichen, um die Funktionstüchtigkeit des Parametermeßdetektors festzustellen.

## Revendications

1. Appareil pour contrôler le bon fonctionnement d'un détecteur (10) de paramètres de mesure qui produit un signal de sortie indiquant le niveau du paramètre sélectionné dans un environnement contrôlé, ledit appareil comportant une source (12) de contrôle pour produire un niveau prédéterminé du paramètre sélectionné, ledit niveau prédéterminé étant plus faible que le maximum de la capacité de niveau de réponse dudit détecteur (10) de mesure de paramètre caractérisé en ce que l'appareil comprend un dispositif (14) d'activation pour produire un signal de sortie intermittent pour activer ladite source (12) de contrôle pendant une période T1 et pour désactiver ladite source (12) de contrôle pendant une période T2, ladite source de contrôle (12) soumettant pendant la période T1 ledit détecteur (10) de mesure de paramètre audit niveau prédéterminé du paramètre sélectionné, ledit détecteur (10) de mesure de paramètre générant pendant la période T1 un signal de sortie correspondant à la combinaison du paramètre sélectionné à partir de l'environnement contrôlé et de la source de contrôle (12), ainsi qu'un signal de sortie correspondant au paramètre sélectionné de l'environnement contrôlé pendant la période T2, l'appareil comportant par ailleurs un détecteur synchrone (18) connecté opérativement audit détecteur (10) de mesure de paramètre et audit dispositif d'activation (14) pour détecter et calculer séparément la moyenne des composants du signal de sortie généré par le détecteur (10) de mesure de paramètre correspondant respectivement à la période T1 et T2 et générant un signal de sortie qui indique la différence entre les moyennes desdits composants de signaux, cette différence correspondant à une mesure du niveau prédéterminé du paramètre sélectionné généré par la source de contrôle (12) relevée par le détecteur (10) de mesure de paramètre; et en ce que ledit appareil comporte en outre un circuit comparateur (20) pour comparer le signal de sortie dudit détecteur synchrone (18) et un signal de référence correspondant au niveau effectif dudit niveau prédéterminé généré par ladite source de contrôle (12), une différence indiquant une irrégularité de fonctionnement dans ledit détecteur (10) de mesure de paramètre.

2. Appareil selon la revendication 1 caractérisé en ce que le signal de sortie du détecteur de mesure de paramètre est un signal de sortie pulsé et en ce que ledit détecteur synchrone comprend un dispositif pour accumuler séparément les informations pulsées du signal de sortie pulsé pendant les périodes T1 et T2 respectivement, et en ce qu'un dispositif est prévu pour soustraire l'information pulsée accumulée pour les périodes T1 et T2 pour produire un signal de sortie à partir dudit détecteur synchrone indiquant le niveau prédéterminé du paramètre sélectionné généré par la source de contrôle tel qu'il a été mesuré par le détecteur de mesure de paramètre.

3. Appareil selon la revendication 1 dans lequel ledit détecteur de mesure de paramètre est un détecteur de radiations caractérisé en ce que ladite source de contrôle est une source de radiations qui réagit aux dispositifs d'activation en soumettant par intermittence ledit détecteur de radiations à un niveau prédéterminé de radiations.

4. Méthode pour le contrôle du bon fonctionnement d'un détecteur de mesure de paramètre qui génère un signal de sortie indiquant le niveau du paramètre sélectionné dans un environnement contrôlé, comportant la génération d'un niveau prédéterminé du paramètre sélectionné, méthode dans laquelle ledit niveau prédéterminé est inférieur au niveau maximum de la capacité de réponse de dudit détecteur de mesure de paramètre caractérisé par des étapes pendant lesquelles ledit détecteur de mesure de paramètre est d'abord soumis par intermittence audit niveau prédéterminé du paramètre sélectionné pendant une période T1, et ledit niveau prédéterminé dudit paramètre sélectionné étant ensuite supprimé pendant la période T2, ledit détecteur de mesure de paramètre générant pendant la période T1 un signal de sortie correspondant à la somme du niveau du paramètre sélectionné à partir de l'environnement contrôlé et du niveau prédéterminé du paramètre sélectionnée, et pendant la période T2 un signal de sortie correspondant au niveau du paramètre sélectionné de l'environnement contrôle; la méthode comportant par ailleurs la détection et, séparément, l'établissement de la moyenne des composants du signal de sortie généré par le détecteur de mesure de paramètre correspondant respectivement aux périodes T1 et T2, ainsi que la génération d'un signal de sortie indiquant la différence entre les moyennes desdits composants de signaux, cette différence correspondant à une mesure dudit niveau prédéterminé du paramètre sélectionné effectuée par le détecteur de mesure de paramètre, et la comparison entre ladite différence est la grandeur effective dudit niveau prédéterminé du paramètre sélectionné permettant de déterminer le bon fonctionnement du détecteur de mesure de paramètre.

ME (MONITORER ENVIRONMENT)

FIG.IA

DETECTOR 10 → SIGNAL CONDITIONING 16

REFERENCE 22

CHECK SOURCE 12 ← OSCILLATOR 14 → SYNCHRONOUS DETECTOR 18 → COMPARATOR 20 → ALARM 70

T1
T2

18

33    32    A
      B
35

DIFFERENTIAL AMPLIFIER 36

REFERENCE 22

COMPARATOR 20 → ALARM 70

FIG. IB

ME

DETECTOR 42 → AMPLIFIER DISCRIMINATOR 44 → 52

REFERENCE 22

ACCUMULATOR 56

CH1
+
SUBTRACTOR 60 → COMPARATOR 20 → ALARM 70
–

CH2
54

ACCUMULATOR 58

CHECK SOURCE 40 → OSCILLATOR 46 → 51

FIG. 2

1